# EUROPEAN PATENT APPLICATION

(11) **EP 4 779 789 A1**
(43) Date of publication of application: **22.07.2026**
(21) Application number: 24877541.3
(22) Date of filing: 11.10.2024
(51) Int. Cl.: H01M 50/531, B21D 43/28, B21D 53/36, B21D 5/00, H01M 50/528, B65G 47/52

(54) **BATTERY CELL MANUFACTURING METHOD AND BATTERY CELL MANUFACTURING SYSTEM**

(30) Priority: 13.10.2023 KR 20230136550
(71) Applicant: SK On Co., Ltd., Seoul 03161 (KR)
(72) Inventor: KIM, Jae Hun, Daejeon 34124 (KR); OH, Yoon Sung, Daejeon 34124 (KR); KIM, Wook Hyun, Daejeon 34124 (KR)
(74) Representative: Prüfer & Partner mbB Patentanwälte · Rechtsanwälte
(86) International application number: PCT/KR2024/015378
(87) International publication number: WO 2025/080005

(57) **Abstract**

The present disclosure relates to a manufacturing method of a battery cell which includes an exterior material accommodating an electrode assembly therein and a lead tab electrically connecting the electrode assembly to the outside and including a stopper protruding toward one side, the method including: a pre-cutting operation for cutting a first region located at an end portion of a cutting lead tab which is connected with the electrode assembly and protrudes outwardly from the exterior material; and a main cutting operation for cutting a second region spaced apart from the stopper in the cutting lead tab by a predetermined distance to form the lead tab.

## Description

### [Field]

The present disclosure relates to a battery cell manufacturing method and a battery cell manufacturing system. Specifically, the present disclosure relates to a battery cell manufacturing method and manufacturing system to form a stopper on a lead tab.

### [Background technology]

A secondary battery is a battery that converts electrical energy into chemical energy and stores the energy to be reused multiple times through charging and discharging. Secondary batteries have been widely used in various industries owing to their economic feasibility and eco-friendliness. In particular, of secondary batteries, lithium secondary batteries are widely utilized across industries, including mobile devices that require high-density energy.

In order to manufacture a secondary battery with high power and high capacity, a plurality of secondary batteries may be used in groups. For example, the secondary battery may be divided into battery cells, battery modules, and battery packs depending on the assembly unit. Battery cells may be grouped to form a battery module, and battery modules may be grouped to form a battery pack.

The battery module may electrically connect a plurality of battery cells to an external source via a busbar assembly. In the process of inserting a plurality of battery cells into the busbar assembly, errors and defects may occur due to assembly tolerances or stacking tolerances. This may result in low quality of the manufactured battery module or reduction in the production efficiency.

### [Detailed Description of the Invention]

### [Technical Problem]

The present disclosure aims to provide a manufacturing method and manufacturing system capable of forming a stopper on a lead tab of a battery cell to reduce an error when inserting a busbar assembly.

The present disclosure aims to provide a manufacturing method and manufacturing system, which may improve the assembly stability of a battery cell and a busbar assembly by providing a constant distance from a stopper to an end portion.

Furthermore, the present disclosure aims to provide a manufacturing method and manufacturing system, which ensures improved energy density and performance by reducing stacking tolerances and assembly errors of a battery cell.

The present disclosure may be widely applied to electric vehicles, battery charging stations, and other green technology fields such as solar power generation, wind power generation, or the like that utilize batteries.

Furthermore, the present disclosure may be used in eco-friendly electric vehicles, hybrid vehicles, or the like to prevent climate change by curbing air pollution and greenhouse gas emissions.

### [Technical solutions]

The present disclosure relates to a manufacturing method of a battery cell which includes an exterior material accommodating an electrode assembly therein and a lead tab electrically connecting the electrode assembly to the outside and including a stopper protruding toward one side, the method including: a pre-cutting operation for cutting a first region located at an end portion of a cutting lead tab which is connected with the electrode assembly and protrudes outwardly from the exterior material; and a main cutting operation for cutting a second region spaced apart from the stopper in the cutting lead tab by a predetermined distance to form the lead tab.

The method may further include a bending operation for pressing a bending region located in the cutting lead tab in one direction to form a stopper having a curved surface.

The method may further include a measuring operation for measuring a shape of the lead tab.

The method may further include a transporting operation for transporting a battery cell by placing the battery cell on an upper surface of a transport member.

The pre-cutting operation may include a first aligning operation for moving the battery cell so that the battery cell is positioned in a predetermined alignment region and a first cutting operation for cutting the first region.

In the first aligning operation, a first side on which the cutting lead tab is located in the battery cell may be pressed so that the battery cell faces a vertical aligner located on a first side of the alignment region, and a second side of the battery cell provided perpendicular to the first side may be pressed so that the battery cell faces a horizontal aligner located perpendicular to the vertical aligner on a second side of the alignment region.

The bending operation may be performed between the first aligning operation and the first cutting operation.

In the bending operation, a pressurizer, which includes a support including a protrusion from which one region protrudes and a depression formed in a shape corresponding to the protrusion, may press a first side and a second side of the bending region, respectively.

The bending region may be formed along a direction perpendicular to a direction in which the lead tab protrudes.

In the pre-cutting operation, when the support and the pressurizer press the bending region, a first cutting member may cut the first region.

In the first cutting operation, a plurality of cut-outs may be formed at the end portion of the cutting lead tab.

The cut-out may be formed along a first edge of the cutting lead tab, a region of the first edge, and a region of a second edge perpendicular to the first edge.

The main cutting operation may include a second aligning operation for moving the battery cell so that the battery cell is positioned in a predetermined fixing region and a second cutting operation for cutting the second region.

In the second aligning operation, a first side on which the cutting lead tab is located in the battery cell may be pressed so that the battery cell faces a vertical fixer located on a first side of the fixing region, and a second side of the battery cell provided perpendicular to the first side may be pressed so that the battery cell faces a horizontal fixer located perpendicular to the vertical fixer on a second side of the fixing region.

The bending operation may be performed between the second aligning operation and the second cutting operation.

In the second cutting operation, a region from a first region of any one of the cut-outs to a second region of the other cut-out may be cut along a direction perpendicular to a direction in which the lead tab protrudes.

The transporter may repeat starting and stopping operations at predetermined intervals.

To address the above objects, a battery cell manufacturing system of the present disclosure includes: a first aligner and a second aligner moving, to a predetermined cell region, a battery cell which includes an exterior material accommodating an electrode assembly therein and a lead tab to electrically connect the electrode assembly to the outside; a pre-cutter connected with the electrode assembly and cutting a first region located on a cutting lead tab to electrically connect the electrode assembly to the outside; a bender pressing a bending region located in the cutting lead tab in one direction to form a "U" shaped stopper; and a main cutter cutting a second region of the lead tab spaced apart from the stopper by a predetermined distance.

The battery cell manufacturing system may further include a measurer measuring a shape of the lead tab.

The battery cell manufacturing system may further include a transporter transporting the battery cell.

### [Effect]

The present disclosure may provide a manufacturing method and manufacturing system capable of forming a stopper on a lead tab of a battery cell to reduce an error when inserting a busbar assembly.

The present disclosure may provide a manufacturing method and manufacturing system, which may improve the assembly stability of a battery cell and a busbar assembly by providing a constant distance from a stopper to an end portion.

Furthermore, the present disclosure may provide a manufacturing method and manufacturing system, which ensures improved energy density and performance by reducing stacking tolerances and assembly errors of a battery cell.

### [Description of the drawing]

FIG. 1 illustrates a battery cell according to the present disclosure.
FIG. 2 illustrates a battery module according to the present disclosure.
FIG. 3 illustrates a view in which a battery cell and a busbar assembly are connected, according to the present disclosure.
FIG. 4 illustrates a cutting lead tab according to the present disclosure.
FIGS. 5 and 6 illustrate a battery cell manufacturing method according to an embodiment of the present disclosure.
FIG. 7 illustrates a battery cell manufacturing system according to the present disclosure.
FIG. 8 illustrates a first aligner according to the present disclosure.
FIG. 9 illustrates a bender and a pre-cutter according to an embodiment of the present disclosure.
FIG. 10 illustrates a second aligner according to an embodiment of the present disclosure.
FIG. 11 illustrates a main cutter according to an embodiment of the present disclosure.
FIG. 12 illustrates a battery cell manufacturing method according to another embodiment of the present disclosure.

### [Embodiments]

Hereinafter, preferred embodiments of the present disclosure will be described in detail with reference to the accompanying drawings. The apparatus configurations and control methods to be described later are for the purpose of illustrating embodiments of the present disclosure and are not intended to limit the scope of the disclosure, and like reference numerals used throughout the specification refer to like components.

Specific terminology used herein is for convenience of description only and is not intended to limit the embodiments shown.

For example, expressions such as "identical" and "equal" not only refer to strictly identical states, but also to states with the presence of tolerances or differences in a degree to which the same function is obtained.

For example, expressions such as "in any direction," "along any direction," "in parallel with," "perpendicular," "centered," "concentric," or "coaxial" that refer to a relative or absolute placement not only refer to such placement strictly, but also to a state of relative displacement by a tolerance, or by an angle or distance of deriving the same function.

For the purposes of describing the present disclosure, the following description is based on a spatial Cartesian coordinate system with the X, Y, and Z axes orthogonal to each other. Each axial direction (X-axis direction, Y-axis direction, Z-axis direction) means both directions in which the respective axis extends.

The following references to X direction, Y direction, and Z direction are for the purpose of clear description of the present disclosure, and each direction may be defined differently depending on where the reference is placed.

The use of terms such as "first, second, third," or the like preceding the components referred below is intended to avoid confusion as to the components to which they refer, but not intended to indicate any order, importance, or dominant-subordinate relationship among the components. For example, it is also possible to implement an invention including only the second component without the first component.

As used herein, singular expressions include the plural unless the context clearly indicates otherwise.

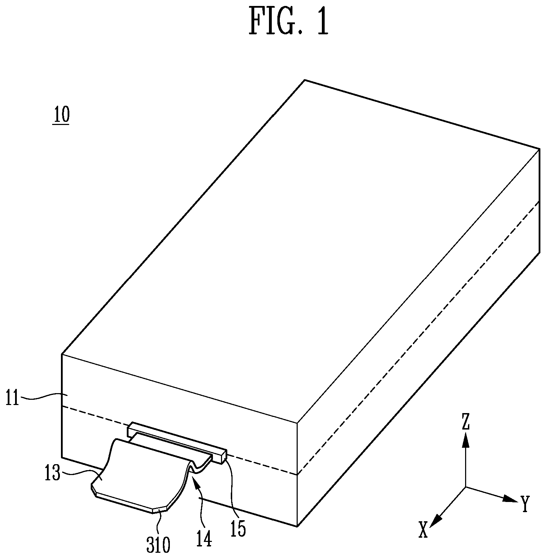

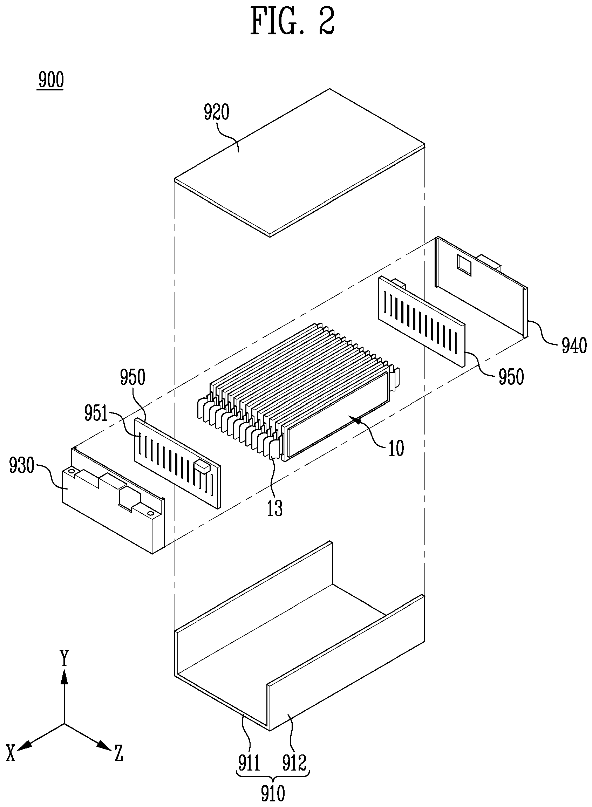

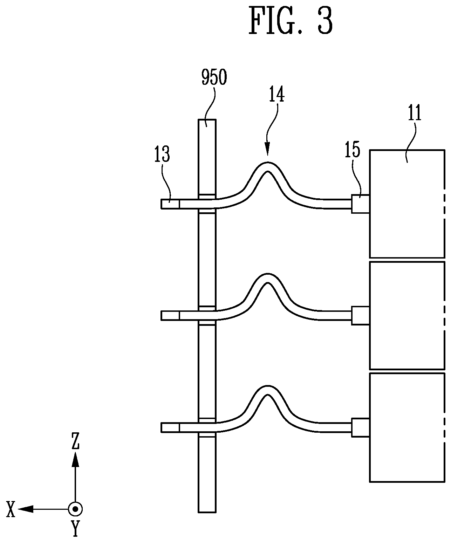

FIG. 1 illustrates a battery cell 10 according to the present disclosure, FIG. 2 illustrates a battery module 900 according to the present disclosure, and FIG. 3 illustrates a view in which a battery cell 10 and a busbar assembly 950 are connected, according to the present disclosure.

The battery cell 10 described herein refers to a secondary battery that may be used repeatedly by charging and discharging electrical energy. For example, it may be a lithium secondary battery. However, the battery cell 10 described herein is not limited to a lithium secondary battery.

The main components of a battery cell 10 are a cathode, an anode, and an electrolyte, and these main components are enclosed in an exterior material 11 (case or pouch). The battery cell 10 further includes a lead tab 13 that protrudes outside of the exterior material 11 for electrical connection to the outside. The lead tabs 13 may be connected to the cathode and the anode of the battery cell 10, respectively.

As described herein, the battery module 900 refers to a battery assembly in which the battery cells 10 are grouped in one or more counts and enclosed in a case to protect them from external shock, heat, vibration, or the like, and to have high power and high capacity.

The battery cell 10 according to the present disclosure includes an exterior material 11 accommodating an electrode assembly therein and a lead tab 13 to electrically connect the electrode assembly to the outside.

The exterior material 11 may include a first body (not shown) and a second body (not shown) to form an accommodating space for accommodating the electrode assembly. The first body and the second body may include a first sealer and a second sealer formed along an edge, respectively. The first body and the second body may be joined via coupling of the first sealer and the second sealer.

The exterior material 11 may include a material with high mechanical rigidity to protect the electrode assembly from the outside. For example, the exterior material 11 may include an aluminum layer.

Additionally, the exterior material 11 may include an insulating layer to insulate the exterior and the interior. Collectively, the exterior material 11 may be formed by laminating a plurality of layers that perform distinct functions.

The lead tabs 13 may be interposed between the first sealer and the second sealer and may be formed to protrude to the outside of the exterior material 11. The lead tab 13 may include a cathode tab and an anode tab. The cathode tab may be connected with the cathode, and the anode tab may be connected with the anode.

The lead tabs 13 may be formed by protruding toward the same direction from a first side of the battery cell 10. Alternatively, it may be formed by protruding from a first side of the battery cell 10 and a second side facing the first side, respectively.

The battery cell may further include an adhesion 15. The adhesion allows the exterior material 11 and the lead tab 13 to be joined. For example, the adhesion may be a sealant.

A plurality of battery cells 10 may be stacked along one direction to form a battery module 900. Referring to FIG. 2, the battery module 900 may further include a plurality of battery cells 10 and a busbar assembly 950. The battery module 900 may further include module housings 910, 920.

The module housings 910, 920 may house a plurality of battery cells inside. The module housings 910, 920 may include a low cover 910 that supports the battery cells and an upper cover 920 that is coupled with the low cover 910. The low cover 910 may include a support body 911 supporting the battery cells and side bodies 912 extending upwardly from both sides of the support body. Referring to FIG. 2, the support body may be connected to the side bodies to be shaped as a channel with the upper surface and both sides open.

The upper cover 920 may be coupled to the low cover 910. The upper cover may be coupled to both edges of the side body. The upper cover and low cover may be combined to form a channel shape with both sides open.

The module housings 910, 920 may further include a front cover 930 and an end cover 940. The front cover 930 may be coupled to the upper cover 920 and the low cover 910. The end cover 940 may be coupled to the upper cover 920 and the low cover 910.

Collectively, the upper cover, low cover, front cover, and end cover may be combined to accommodate a plurality of battery cells therein.

The battery module 900 may further include a busbar assembly 950. The busbar assembly 950 may electrically connect the plurality of battery cells 10. As a result, the plurality of battery cells 10 may be housed in the module housing, and the busbar assembly 950 may electrically connect the plurality of battery cells 10.

To this end, the busbar assembly 950 may include a through-hole 951 into which the battery cell 10 is inserted. Referring to FIG. 3, a lead tab 13 of the battery cell 10 may be inserted into the through-hole 951 to join the busbar assembly 950 and the battery cell 10. Collectively, the plurality of battery cells 10 will each be inserted into the through-holes of the busbar assembly, with the lead tabs 13 protruding.

However, the battery cell 10 may not be inserted into the busbar assembly 950 due to stacking tolerances during the process of stacking the battery cells 10. Also, after the battery cell 10 is inserted into the busbar assembly, the assembly may not proceed properly due to the lead tab 13 having each different protrusion length. This may result in inefficient use of the internal space to lead to reduction in the energy density of the battery module. Also, the assembly stability may be reduced due to the different protruding lengths.

A battery cell manufacturing method of the present disclosure may improve the stability and performance of a battery module by providing a stopper 14 on the lead tab 13. Also, referring to FIG. 3, the stopper 14 prevents the lead tabs from protruding beyond a certain distance. Furthermore, in the manufacturing method of a battery cell 10 of the present disclosure, the battery cell 10 may be easily inserted into the busbar assembly by having a cut-out 310 at an end portion of the lead tabs 13.

Similarly, a battery cell manufacturing system 1000 of the present disclosure may include a stopper 14 in the lead tab 13 and a cut-out 310.

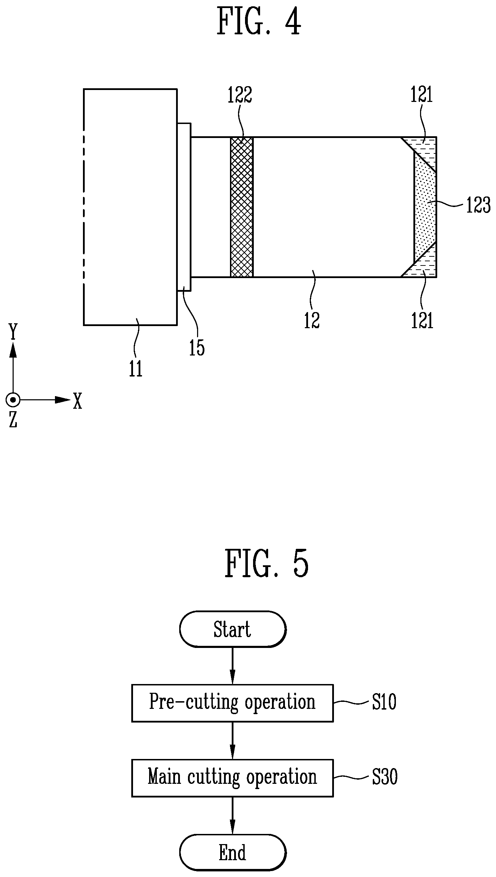

FIG. 4 illustrates a cutting lead tab 12 according to the present disclosure.

Referring to FIG. 4, the battery cell 10 may include a cutting lead tab 12. The cutting lead tab 12 may be processed to produce a lead tab 13. The cutting lead tab 12 may be connected with the cathode and the anode. A first region of the cutting lead tab 12 may be pressed to be bent. Additionally, a second region of the cutting lead tab 12 may be cut. This is to conform the protruding length of the lead tab to a predetermined specification when inserted into the busbar assembly. This may allow a plurality of battery cells 10 to be manufactured with the same protruding length. Collectively, the cutting lead tab 12 may be bent or cut to form the lead tab 13.

Referring to FIG. 4, the cutting lead tab 12 may include a bending region 122, a first region 121, and a second region 123. The bending region 122 may be located in the cutting lead tab 12. The bending region 122 may be bent to form a stopper 14. The bending region 122 may be formed with a length of 2 mm to 7 mm. The stopper may be formed by protruding outwardly from the cutting lead tab. This allows the stopper 14 to protrude at a certain length so that the stopper 14 may be caught by the through-hole upon insertion.

The first region 121 may be located at an end portion of the cutting lead tab 12. The first region 121 may be cut to form the cut-out 310. Referring to FIG. 4, the first region 121 may include a vertex of the cutting lead tab 12. This allows the cut-out 310 to be formed at an edge. For example, the cut-out 310 may be a chamfer. Alternatively, the cut-out 310 may include a curved surface.

This is to facilitate insertion of the lead tab 13 into the busbar assembly. Due to the cut-out 310, the length of the lead tab 13 along the Y-direction may be reduced such that the lead tab 13 may be easily inserted into the busbar assembly. The cut-out 310 may guide the battery cell 10 after being inserted into the through-hole.

The second region 123 may be located at an end portion of the cutting lead tab 12. The second region 123 may be spaced apart from the stopper 14 which is formed by being bent by a predetermined distance. This is to adjust the length of the lead tab 13. This allows the battery cell 10 to be manufactured in a uniform length.

For example, the second region 123 may be spaced apart from the stopper 14 by 1 mm to 3 mm. This may improve assembly stability when assembling the battery module.

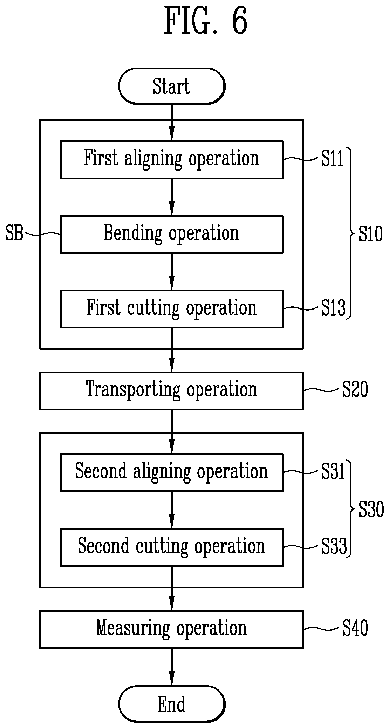

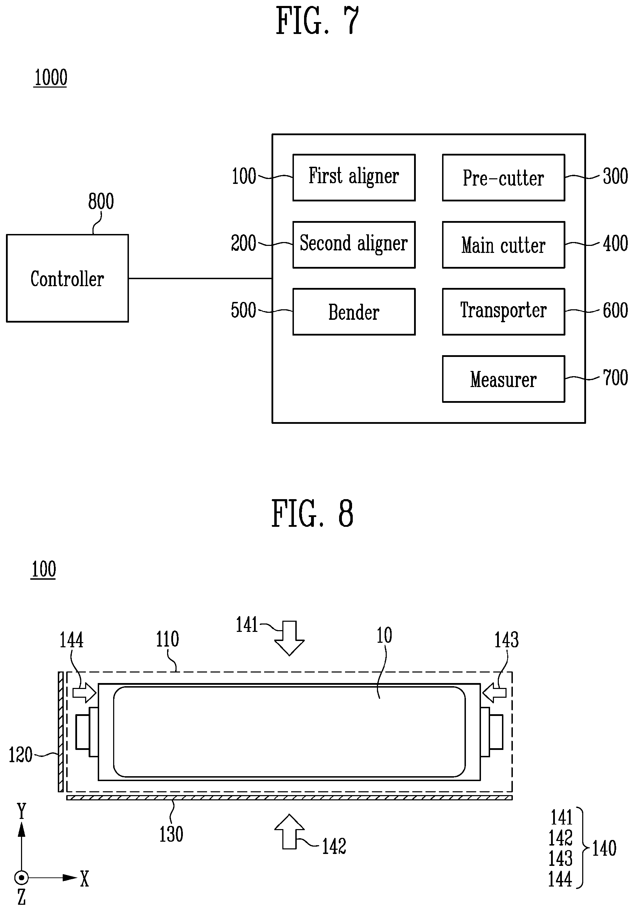

FIGS. 5 and 6 illustrate a battery cell manufacturing method according to an embodiment of the present disclosure, and FIG. 7 illustrates a battery cell manufacturing system 1000 according to the present disclosure.

Referring to FIG. 5, the battery cell manufacturing method of the present disclosure includes a pre-cutting operation S10 and a main cutting operation S30.

In the pre-cutting operation S10 in the battery cell manufacturing method of the present disclosure, a first region 121 located at an end portion of the cutting lead tab 12 may be cut. Referring to the foregoing, the pre-cutting operation S10 may proceed to form the cut-out 310.

Referring to FIG. 7, the battery cell manufacturing system 1000 of the present disclosure may include a pre-cutter 300. The pre-cutter 300 may carry out the pre-cutting operation S10.

In the main cutting operation S30 of the battery cell manufacturing method of the present disclosure, a second region 123 spaced apart at a predetermined distance from the stopper 14 in the cutting lead tab 12 may be cut to form the lead tab 13. The main cutting operation will be described in detail after describing the pre-cutting operation.

Referring to FIG. 6, the pre-cutting operation S10 may include a first aligning operation S11 and a first cutting operation S13. To precisely cut the first region 121 to the specification, it is necessary to align the cutting lead tabs 12. To this end, the first aligning operation S11 may be proceed prior to the first cutting operation S13. The first aligning operation S11 may be performed by the first aligner 100.

As a result, the first cutting operation S13 means cutting the first region 121, and the first aligning operation S11 means moving the battery cell 10 so that the battery cell 10 is positioned in the preset alignment region 110 prior to cutting.

The alignment region 110 may be prepared in advance to align the battery cells 10. For example, the alignment region 110 may be prepared in advance on a transfer plate when the battery cell 10 is moved by the transfer plate. Alternatively, the alignment region 110 may be a virtual region. The alignment region 110 may be an imaginary region identified by vision.

FIG. 8 illustrates a first aligner 100 according to the present disclosure.

Referring to FIG. 8, the first aligner 100 may include a vertical aligner 120, a horizontal aligner 130, and an alignment pressurizer 140. The vertical aligner 120 may be located on a first side of the alignment region 110.

The horizontal aligner 130 may be positioned perpendicular to the vertical aligner 120 on a second side of the alignment region 110. For example, the vertical aligner 120 and the horizontal aligner 130 may be a datum block. Alternatively, the vertical aligner 120 and the horizontal aligner 130 may be imaginary regions.

The alignment pressurizer 140 may press the battery cell 10. A plurality of alignment pressurizers 140 may be provided to move the battery cell 10 in a vertical direction and a horizontal direction.

Referring to FIG. 8, the alignment pressurizer 140 may include a first alignment pressurizer 143 and a second alignment pressurizer 144 provided along an X-direction, which is a direction in which the lead tab 13 protrudes. The alignment pressurizer 140 may also include a third alignment pressurizer 141 and a fourth alignment pressurizer 142 provided along a Y-direction, which is a direction perpendicular to the direction in which the lead tab 13 protrudes.

The alignment pressurizer 140 may include a resilient material to press the battery cell 10 while minimizing impact to the battery cell 10. For example, the alignment pressurizer 140 may be a tension spring.

The alignment pressurizer 140 may press one side of the battery cell 10 to move the battery cell 10 toward the vertical aligner 120 and the horizontal aligner 130.

In an embodiment, in the battery cell manufacturing method according to the present disclosure, a bending operation SB may be performed between the first aligning operation S11 and the first cutting operation S13.

In the bending operation SB, a stopper having a curved surface may be formed by pressing a bending region located in the cutting lead tab in one direction.

In other words, the bending region 122 may be bent to form the stopper 14 before the cut-out 310 is formed. The bending operation SB may be carried out by the bender 500.

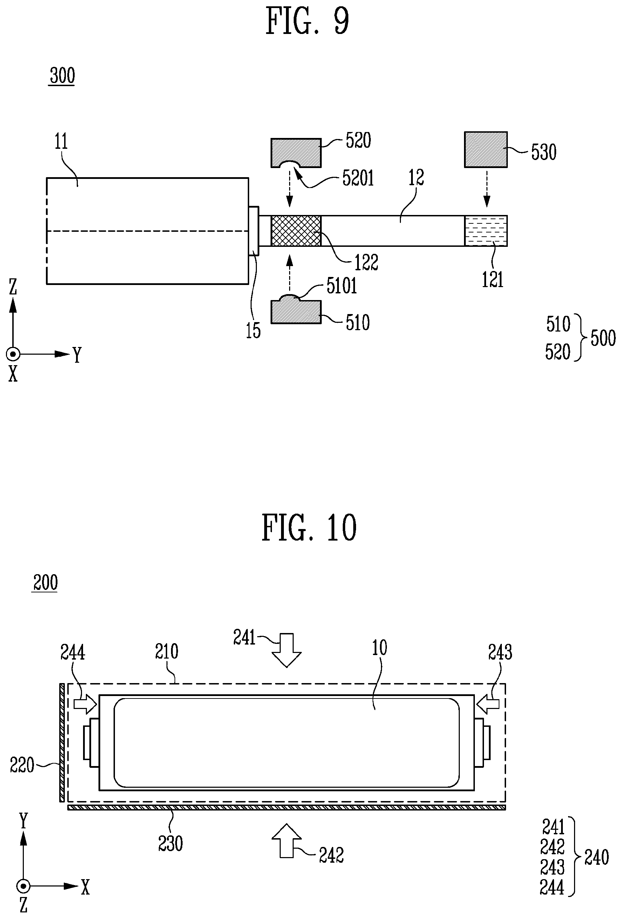

FIG. 9 illustrates a bender 500 and a pre-cutter 300 according to an embodiment of the present disclosure.

Referring to FIG. 9, the bender 500 may include a support 510 and a pressurizer 520. The support 510 may include a protrusion 5101 having a first region protruding. The pressurizer 520 may include a depression 5201 formed in a shape corresponding to the protrusion 5101. For example, the support 510 may be a bending die. The pressurizer 520 may be a bending punch.

The support 510 may support a first side of the bending region 122. The support 510 may press the first side of the bending region 122 and the pressurizer 520 may press a second side. Collectively, the support 510 and the pressurizer 520 may interpose and press the cutting lead tab 12. This allows the stopper 14 to be formed.

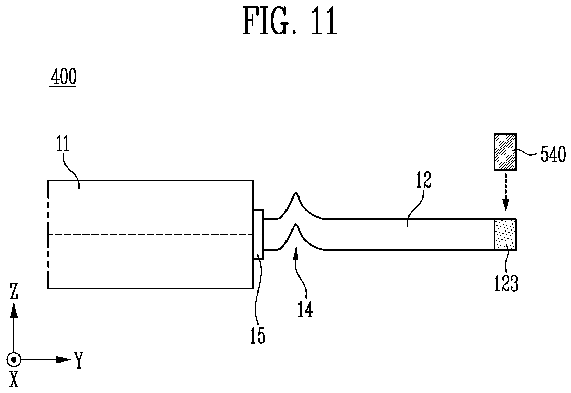

The stopper may include a curved surface. The stopper may be formed to protrude from a first region of the lead tabs. For example, referring to FIG. 11 to be described later, the stopper may include a "U" shape.

The protrusion 5101 provided on the support 510 may press the bending region 122 to form the stopper 14. This allows the stopper 14 to be precisely formed while preventing damage to the cutting lead tab 12.

The bending region 122 may be formed along a direction perpendicular to the direction in which the lead tab 13 protrudes. This is to prevent the stopper 14 (in FIG. 11) from passing through the through-hole. The stopper 14 may protrude in the Z direction and be formed along the X direction of the cutting lead tab 12. This prevents the stopper 14 from passing through the through-hole.

The pre-cutter 300 may include a first cutting member 530. The first cutting member 530 may cut the first region 121 when the support 510 and the pressurizer 520 press the bending region 122. The cutting lead tab 12 may be fixed by the support 510 and the pressurizer 520 to allow the first cutting member 530 to accurately cut the first region 121.

When cutting the first region 121, a plurality of cut-outs 310 may be formed on one side of the cutting lead tab 12. Further, the cut-out 310 may be formed along a region of a first edge and a region of a second edge of the cutting lead tab 12. The first edge and the second edge may be formed perpendicularly.

This is to cut a portion of the first end of the cutting lead tab 12 such that the cutting lead tab 12 may be easily inserted into an insertion hole.

For example, referring to FIG. 4, a plurality of first regions 121 may be formed, including edges. A plurality of cut-outs 310 may be formed by cutting each of the first regions 121 by the first cutter.

In the battery cell manufacturing method of the present disclosure, the lead tab 13 may be formed by cutting the second region 123 in the main cutting operation S30. The main cutter 400 in the battery cell manufacturing system 1000 of the present disclosure may cut the second region 123 to form the lead tab 13.

Referring again to FIG. 6, the main cutting operation S30 may include a second aligning operation S31 and a second cutting operation S33. As mentioned above, the battery cell 10 may be moved to position the battery cell 10 in the predetermined fixing region 210 to precisely cut the second region 123. To this end, a second aligning operation S31 may be performed prior to the second cutting operation S33.

The fixing region 210 may be prepared in advance to align the battery cells 10. For example, when the battery cell 10 is moved by a transfer plate, the fixing region 210 may be prepared in advance on the transfer plate. Alternatively, the fixing region 210 may be a virtual region. The fixing region 210 may be a virtual region identified by vision.

FIG. 10 illustrates a second aligner 200 according to the present disclosure.

Referring to FIG. 10, the second aligner 200 may include a vertical fixer 220, a horizontal fixer 230, and a fixing pressurizer 240. The vertical fixer 220 may be provided at a first edge of the fixing region 210. The horizontal fixer 230 may be provided at a second edge of the fixing region 210 perpendicular to the vertical fixer 220. For example, the vertical fixer 220 and the horizontal fixer 230 may be datum blocks. Alternately, the vertical fixer 220 and the horizontal fixer 230 may represent imaginary regions.

The fixing pressurizer 240 may press the battery cell 10. A plurality of fixing pressurizers 240 may be provided to move the battery cell 10 in a vertical direction and a horizontal direction.

Referring to FIG. 10, the fixing pressurizer 240 may include a first fixing pressurizer 243 and a second fixing pressurizer 244 along the X-direction, which is a direction in which the lead tab 13 protrudes. The fixing pressurizer 240 may also include a third fixing pressurizer 241 and a fourth fixing pressurizer 242 along the Y-direction, which is a direction perpendicular to the direction in which the lead tab 13 protrudes.

The fixing pressurizer 240 may include a resilient material to press the battery cell 10 while minimizing impact to the battery cell 10. For example, the fixing pressurizer 240 may be a tension spring.

The fixing pressurizer 240 may press one side of the battery cell 10 to move the battery cell 10 toward the vertical fixer 220 and the horizontal fixer 230.

Meanwhile, the first aligner 100 and the second aligner 200 may be the same. The first aligner 100 and the second aligner 200 may be provided separately and may be provided in the same single device.

When the first aligner 100 and the second aligner 200 are provided identically, the alignment region 110 will refer to the same region as the fixing region 210, and the alignment pressurizer 140 will refer to the same object as the fixing pressurizer 240.

FIG. 11 illustrates a main cutter 400 according to an embodiment of the present disclosure.

Referring to FIG. 11, the second region 123 may be cut after the battery cell 10 is placed on the fixing region 210.

A main cutter 400 of a battery system according to the present disclosure may cut the second region 123. The main cutter 400 may include a second cutting member 540. The second cutting member 540 may cut the predetermined second region 123 of the battery cell 10. This allows the length of the cutting lead tab 12 to be shaped to a specification.

For example, the length from the stopper 14 to the end of the cut lead tab 12 may be preset to be between 1 mm and 3 mm. The second cutting member 540 may press the cutting lead tab 12 along the Z-direction to conform to the set length.

Meanwhile, the second cutting member 540 may cut the cutting lead tab 12 along a direction perpendicular to the direction in which the lead tab 13 protrudes. The first cutting member 530 may cut the first region 121 to form the cut-out 310. In this case, the second cutting member 540 may cut a first region of any first cut-out 310 from a second region of a second cut-out 310.

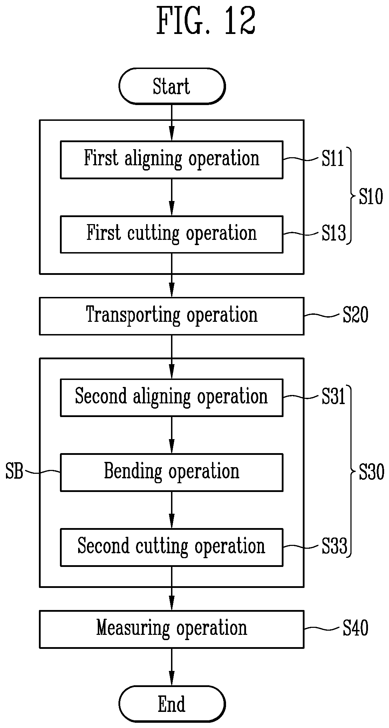

FIG. 12 illustrates a manufacturing method of a battery cell 10 according to another embodiment of the present disclosure.

Referring to FIG. 12, in the manufacturing method of a battery cell 10 according to another embodiment of the present disclosure, a bending operation SB may be performed between the second aligning operation S31 and the second cutting operation S32. In other words, the cut-out 310 may be formed before the stopper 14 is formed. This is to improve the precision in the manufacturing the lead tab 13.

The manufacturing method of the present disclosure may further include a measuring operation S40 for measuring the shape of the lead tab 13. The measuring operation S40 may be performed after the main cutting operation S30. The measuring operation S40 may be performed by a measurer 700. The measurer 700 may measure the length and thickness of the lead tab 13 to check for deviations from a predetermined specification. For example, the measurer 700 may be a vision or camera that measures by photographing.

When the deviation from the specification exceeds the set value, the battery cell 10 may be recovered. Thereby, the defective battery cells 10 may be removed, and thus the accuracy and production efficiency in the manufacturing of battery module may be improved.

The manufacturing method of the present disclosure may further include a transporting operation S20 for transporting the battery cells 10. The transporting operation S20 may be performed between the pre-cutting operation S10 and the main cutting operation S30. For example, the main cutting operation S30 may proceed as the battery cell 10 is transported after the cut-out 310 is formed by cutting with the cutting lead tab 12 by a pre-cutter 300.

The transporting operation S20 may be carried out by a transporter 600. The transporter 600 may include a transport member (not shown) with a supporting ability. For example, a battery cell 10 may be placed on a top surface of the transport member to support the battery cell 10.

The alignment region 110 and a fixing region 210 may be provided on the transport member. Also, a vertical aligner 120, a horizontal aligner 130, a vertical fixer, and a horizontal fixer 230 may be provided on the transport member.

The transporter 600 may repeat starting and stopping operations at predetermined intervals. For example, the transporter 600 may include a pitch conveyor. Thereby, the process efficient may be improved.

Specifically, each operation may be performed as a plurality of battery cells 10 are disposed on the pitch conveyor and move along one direction. Any one of the battery cells 10 may undergo a pre-cutting operation S10 by the pre-cutter 300, and another one of the battery cells 10 may undergo a main cutting operation S30 by the main cutter 400. In this case, when the pitch conveyor is moved according to the time of the most time-consuming operation in each operation, each operation may be carried out simultaneously in different rooms.

The battery cell manufacturing system 1000 of the present disclosure may further include a controller 800. The controller 800 may control each of the components. For example, the controller 800 may control the first aligner 100 to control the battery cells 10 to be placed in the predetermined alignment region 110.

Depending on the embodiment, there may be individual controllers controlling each component and a general controller controlling the individual controller. In this case, a user may control the battery cell manufacturing system 1000 of the present disclosure by controlling the general controller.

The various aspects of the present disclosure are as follows.

First aspect: According to an aspect of the present disclosure, a manufacturing method of a battery cell, which includes an exterior material accommodating an electrode assembly therein and a lead tab electrically connecting the electrode assembly to the outside and including a stopper protruding toward one side, may include: a pre-cutting operation for cutting a first region located at an end portion of a cutting lead tab which is connected with the electrode assembly and protrudes outwardly from the exterior material; and a main cutting operation for cutting a second region spaced apart from the stopper in the cutting lead tab by a predetermined distance to form the lead tab.

Second aspect: According to the first aspect, the method may further include a bending operation for pressing a bending region located in the cutting lead tab in one direction to form a stopper having a curved surface.

Third aspect: According to the first and second aspects, the method may further include a measuring operation for measuring a shape of the lead tab.

Fourth aspect: According to any one of the first to third aspects, the method may further include a transporting operation for transporting a battery cell by placing the battery cell on an upper surface of a transport member.

Fifth aspect: According to any one of the first to fourth aspects, the pre-cutting operation may include a first aligning operation for moving the battery cell so that the battery cell is positioned in a predetermined alignment region and a first cutting operation for cutting the first region.

Sixth aspect: According to the fifth aspect, in the first aligning operation, a first side on which the cutting lead tab is located in the battery cell may be pressed so that the battery cell faces a vertical aligner located on a first side of the alignment region, and a second side of the battery cell provided perpendicular to the first side may be pressed so that the battery cell faces a horizontal aligner located perpendicular to the vertical aligner on a second side of the alignment region.

Seventh aspect: According to the fifth or sixth aspect, the bending operation may be performed between the first aligning operation and the first cutting operation.

Eighth aspect: According to any one of the second to seventh aspects, in the bending operation, a pressurizer, which includes a support including a protrusion from which one region protrudes and a depression formed in a shape corresponding to the protrusion, may press a first side and a second side of the bending region, respectively.

Ninth aspect: According to any one of the second to eighth aspects, the bending region may be formed along a direction perpendicular to a direction in which the lead tab protrudes.

Tenth aspect: According to the eighth or ninth aspect, in the pre-cutting operation, when the support and the pressurizer press the bending region, a first cutting member may cut the first region.

Eleventh aspect: According to any one of the fifth to tenth aspects, in the first cutting operation, a plurality of cut-outs may be formed at the end portion of the cutting lead tab.

Twelfth aspect: According to the eleventh aspect, the cut-out may be formed along a first edge of the cutting lead tab, a region of the first edge, and a region of a second edge perpendicular to the first edge.

Thirteenth aspect: According to the eleventh or twelfth aspect, the main cutting operation may include a second aligning operation for moving the battery cell so that the battery cell is positioned in a predetermined fixing region and a second cutting operation for cutting the second region.

Fourteenth aspect: According to the thirteenth aspect, in the second aligning operation, a first side on which the cutting lead tab is located in the battery cell may be pressed so that the battery cell faces a vertical fixer located on a first side of the fixing region, and a second side of the battery cell provided perpendicular to the first side may be pressed so that the battery cell faces a horizontal fixer located perpendicular to the vertical fixer on a second side of the fixing region.

Fifteenth aspect: According to the thirteenth or fourteenth aspect, the bending operation may be performed between the second aligning operation and the second cutting operation.

Sixteenth aspect: According to any one of the thirteenth to fifteenth aspects, in the second cutting operation, a region from a first region of any one of the cut-outs to a second region of the other cut-out may be cut along a direction perpendicular to a direction in which the lead tab protrudes.

Seventeenth aspect: According to any one of the fourth to sixteenth aspects, the transporter may repeat starting and stopping operations at predetermined intervals.

Eighteenth aspect: According to an aspect of the present disclosure, a battery cell manufacturing system may be provided, which includes: a first aligner and a second aligner moving, to a predetermined cell region, a battery cell which includes an exterior material accommodating an electrode assembly therein and a lead tab to electrically connect the electrode assembly to the outside; a pre-cutter connected with the electrode assembly and cutting a first region located on a cutting lead tab to electrically connect the electrode assembly to the outside; a bender pressing a bending region located in the cutting lead tab in one direction to form a "U" shaped stopper; and a main cutter cutting a second region of the lead tab spaced apart from the stopper by a predetermined distance.

Nineteenth aspect: According to the eighteenth aspect, the battery cell manufacturing system may further include a measurer measuring a shape of the lead tab.

Twentieth aspect: According to the eighteenth or nineteenth aspect, the battery cell manufacturing system may further include a transporter transporting the battery cell.

The present disclosure may be practiced in various modifications and is not limited to the embodiments described above. Therefore, if a modified embodiment includes components of the patent claims of the present disclosure, it should be considered to fall within the scope of the present disclosure.

## Claims

1. A manufacturing method of a battery cell which includes an exterior material accommodating an electrode assembly therein and a lead tab electrically connecting the electrode assembly to the outside and including a stopper protruding toward one side, the method comprising:
a pre-cutting operation for cutting a first region located at an end portion of a cutting lead tab which is connected with the electrode assembly and protrudes outwardly from the exterior material; and
a main cutting operation for cutting a second region spaced apart from the stopper in the cutting lead tab by a predetermined distance to form the lead tab.

2. The method according to claim 1, further comprising a bending operation for pressing a bending region located in the cutting lead tab in one direction to form a stopper having a curved surface.

3. The method according to claim 1, further comprising a measuring operation for measuring a shape of the lead tab.

4. The method according to claim 1, further comprising a transporting operation for transporting a battery cell by placing the battery cell on an upper surface of a transport member.

5. The method according to claim 2, wherein the pre-cutting operation includes a first aligning operation for moving the battery cell so that the battery cell is positioned in a predetermined alignment region and a first cutting operation for cutting the first region.

6. The method according to claim 5, wherein, in the first aligning operation, a first side on which the cutting lead tab is located in the battery cell is pressed so that the battery cell faces a vertical aligner located on a first side of the alignment region, and a second side of the battery cell provided perpendicular to the first side is pressed so that the battery cell faces a horizontal aligner located perpendicular to the vertical aligner on a second side of the alignment region.

7. The method according to claim 5, wherein the bending operation is performed between the first aligning operation and the first cutting operation.

8. The method according to claim 2, wherein, in the bending operation, a pressurizer, which includes a support including a protrusion from which one region protrudes and a depression formed in a shape corresponding to the protrusion, presses a first side and a second side of the bending region, respectively.

9. The method according to claim 2, wherein the bending region is formed along a direction perpendicular to a direction in which the lead tab protrudes.

10. The method according to claim 8, wherein, in the pre-cutting operation, when the support and the pressurizer press the bending region, a first cutting member cuts the first region.

11. The method according to claim 5, wherein, in the first cutting operation, a plurality of cut-outs are formed at the end portion of the cutting lead tab.

12. The method according to claim 11, wherein the cut-out is formed along a first edge of the cutting lead tab, a region of the first edge, and a region of a second edge perpendicular to the first edge.

13. The method according to claim 11, wherein the main cutting operation includes:
a second aligning operation for moving the battery cell so that the battery cell is positioned in a predetermined fixing region; and
a second cutting operation for cutting the second region.

14. The method according to claim 13, wherein, in the second aligning operation, a first side on which the cutting lead tab is located in the battery cell is pressed so that the battery cell faces a vertical fixer located on a first side of the fixing region, and a second side of the battery cell provided perpendicular to the first side is pressed so that the battery cell faces a horizontal fixer located perpendicular to the vertical fixer on a second side of the fixing region.

15. The method according to claim 14, wherein the bending operation is performed between the second aligning operation and the second cutting operation.

16. The method according to claim 14, wherein, in the second cutting operation, a region from a first region of any one of the cut-outs to a second region of the other cut-out is cut along a direction perpendicular to a direction in which the lead tab protrudes.

17. The method according to claim 4, wherein the transporter repeats starting and stopping operations at predetermined intervals.

18. A battery cell manufacturing system comprising:
a first aligner and a second aligner moving, to a predetermined cell region, a battery cell which includes an exterior material accommodating an electrode assembly therein and a lead tab to electrically connect the electrode assembly to the outside;
a pre-cutter connected with the electrode assembly and cutting a first region located on a cutting lead tab to electrically connect the electrode assembly to the outside;
a bender pressing a bending region located in the cutting lead tab in one direction to form a "U" shaped stopper; and
a main cutter cutting a second region of the lead tab spaced apart from the stopper by a predetermined distance.

19. The system according to claim 18, further comprising a measurer measuring a shape of the lead tab.

20. The system according to claim 18, further comprising a transporter transporting the battery cell.
